# EUROPEAN PATENT SPECIFICATION

(11) **EP 1 838 636 B1**
(45) Date of publication and mention of the grant of the patent: **05.08.2015**
(21) Application number: 05821642.5
(22) Date of filing: 29.12.2005
(51) Int. Cl.: C03B 37/05

(54) **METHOD AND APPARATUS IN THE MANUFACTURE OF MINERAL FIBRES**
VERFAHREN UND VORRICHTUNG BEI DER HERSTELLUNG VON MINERALFASERN
PROCEDE ET APPAREIL DE FABRICATION DE FIBRES MINERALES

(30) Priority: 31.12.2004 FI 20041699
(43) Date of publication of application: 03.10.2007
(73) Proprietor: Paroc Group Oy, 00181 Helsinki (FI)
(72) Inventor: ÅSTRAND, Erik, FI-21600 Parainen (FI); WALLI, Bjarne, FI-21600 Parainen (FI)
(74) Representative: Turun Patenttitoimisto Oy
(86) International application number: PCT/FI2005/000553
(87) International publication number: WO 2006/070055

(56) References cited:
- EP-A- 1 182 177
- WO-A-92/12941
- US-A- 4 433 992
- US-A- 5 356 450

## Description

The present invention relates to a method and an apparatus in the manufacture of mineral fibres according to the preamble of the claims below.

Mineral wool, such as rock wool, is made by melting suitable raw materials, for example diabase, limestone or slag in a melting furnace. The mineral melt obtained is discharged from the melting furnace in the form of a melt jet to a fiberising apparatus, where the melt is formed into mineral fibres. Normally a fiberising apparatus of the spinning machine type is used, which comprises a series of rotating fiberising rotors or spinning rotors, typically 3 to 4 rotors. Mineral melt from the melting furnace is directed toward the mantle surface of the first rotor where it gets hold of the rotor's mantle surface to a certain extent before it is thrown out as a cascade of drops against the mantle surface of the adjacent second rotor in the series. A part of the mineral melt gets then sufficient hold of the mantle surface of the second rotor in order to be formed into fibres due to the effect of the centrifugal force. Another part of the mineral melt is thrown further against the mantle surface of the third rotor. In this way the mineral melt is "transported" as a jet of mineral melt drops or a drop cascade, successively from one rotor to the subsequent one through the whole fiberising apparatus, while a part of the mineral melt is formed into mineral fibres. A binder may be applied on the formed mineral fibres, either during the fibre formation or after it.

The mineral fibres formed at the fiberising rotors are transported away from the fiberising apparatus by means of blowing off. The blowing off of mineral fibres can be arranged by so-called primary blow-off means, which have been placed at the peripheries of the rotors or with secondary blow-off means, which have been arranged at a distance from the fiberising apparatus. The mineral fibres are transported from the fiberising apparatus through a collecting chamber towards a collecting member, which is arranged in front of the fiberising apparatus. The collecting member can be, for example a belt conveyor or a rotating drum.

The mineral fibres are usually collected as a thin fibre web, a so-called primary fibre web or a primary web. The primary fibre web is normally collected by a travelling perforated surface forming the collecting surface of the collecting member. The velocity at which the collecting surface proceeds defines the surface weight of the collected primary fibre web if the fibre mass flow from the fiberising apparatus is constant. The higher the velocity of the collecting surface is, the thinner the collected primary web becomes and the lower its surface weight is. Generally, the aim is to collect as thin primary mineral fibre webs as possible. Snarls and tufts of mineral fibre are undesirable in the collected fibre web, as they lower the quality of the end product. It is naturally also an aim to avoid holes in the collected primary mineral fibre web.

When the amount mineral fibres produced at the fiberising apparatus increases, the collecting velocity of the collecting member must be raised in the same extent, so that the surface weight of the collected primary web is kept constant and that the surface weight of the web does not become too high. The velocity of the collecting member is, however, restricted by other apparatuses later on in the process and can therefore not be raised at will. The post-processing of both thin as well as fast primary mineral fibre web has proved to be complicated among other things because the thin web easily breaks in transport and possible cross-lapping.

The structure of the collected primary web is greatly influenced by the conditions in the collecting chamber during the travel of the mineral fibres from the fiberising apparatus to the collecting member. If the flow conditions in the collecting chamber are turbulent and back-eddies exist, the collected primary web becomes slightly nodular and inhomogeneous. The fiberising and collecting processes become difficult to control when the produced amount of fibre increases.

It is important to optimise each subprocess in the manufacture of mineral wool so that a desired end product is achieved. It has proved difficult to manufacture and collect large amounts of fibre from the same fiberising apparatus without deteriorating the structure of the collected primary web and the finished mineral wool.

There is number of different uses for mineral wool, for example as insulating material in various constructions. Different requirements are made on the properties of the mineral wool depending on the use of the manufactured mineral wool, on its strength, compressibility etc. The properties of mineral wool are influenced by the properties of the individual mineral fibres, in other words by the thickness, length, as well as, space orientation of individual fibres in the mineral wool. These properties are among other things influenced by the prevailing conditions when the mineral fibres are formed at the fiberising rotors. The binder used and/or other possible additives also influence the end properties of mineral wool. Attempts have been made to optimise the properties of finished mineral wool by treating the collected primary web in various ways.

WO 92/12941 discloses a method and apparatus for making mineral wool fibres comprising a number of fiberising rotors. Preferably an air slot is associated with each of the second, third and fourth fiberising rotor. Blades can be used control the direction of the air flow from the slot. The apparatus may also have suitable binder spays mounted around the fiberising means. Fibres are collected by a conveyor that carries them away from the fiberising rotors.

Therefore, the object of this invention is to provide a method and an apparatus for the manufacture of mineral wool fibres, where the above-mentioned disadvantages are minimised.

The object is thus to achieve a method, whereby the properties of mineral fibres can be influenced as they are formed at the surface of the fiberising rotor.

Another object of the present invention is to achieve an apparatus by means of which mineral wool fibres of a certain quality can be produced.

These objects are attained with a method and an apparatus having the characteristics presented in the characterising part of the independent claims below.

A typical method according to the invention is defined in claim 1. It typically comprises the following steps
- mineral melt is led to a first rotating fiberising rotor in a fiberising apparatus comprising at least two fiberising rotors,
- mineral melt is thrown from the mantle surface of the first rotating rotor to the mantle surface of a second rotating rotor, and from there successively to the mantle surfaces of possible following rotors,
- mineral melt is formed to mineral fibres at the active peripheries of the rotating rotors,
- the mineral fibres formed are blown off from the fiberising rotors of the fiberising apparatus towards a collecting member by means of fibre blow-off means arranged at the active peripheries of the rotors, whereby the active periphery of the at least one of the fiberising rotors is divided into at least a first section and a second section,
- binder is applied to the mineral fibres during their formation by means of a binder applying members arranged at the active peripheries of the rotors,
characterised in that
- the active peripheries of all fiberising rotors in a fiberising apparatus are divided into at least two sections,
- the fibre blow-off means at the first section are controlled independently of the fibre blow-off means at the second section, whereby the fibre blow-off means at the first section blows off mineral fibres towards a first location on a fibre collecting member, and the fibre blow-off means at the second section blows off mineral fibres towards a second location on a collecting member, and
- the fibre blow-off means blows off mineral fibres at the first section at a first velocity, and at the second section at a second velocity.

A typical fiberising rotor arrangement comprises
- a rotating fiberising rotor with an active periphery at which mineral melt is formed to mineral fibres,
- fibre blow-off means, which is arranged at the active periphery of the fiberising rotor, and which is arranged to blow off mineral fibres towards a collecting member,
- binder applying member, which is arranged at the active periphery of the fiberising rotor and which is connected to a binder feeding member, whereby
- the active periphery of the fiberising rotor is divided into at least a first sector and a second sector, and a binder applying member and/or fibre blow-off means at the first section are controlled independently of the binder applying member and/or fibre blow-off means at the second section.

A typical apparatus according to the present invention is defined in claim 6. It comprises, inter alia,
- at least three fiberising rotors, which are arranged to rotate around essentially horizontal axes, for transforming mineral melt into mineral fibres at the active peripheries of the fiberising rotors,
- fibre blow-off means which are arranged at the active peripheries of the fiberising rotors for blowing off of mineral fibres from the fiberising apparatus towards a collecting member, and
- binder applying members which are arranged at the active peripheries of the fiberising rotors, and
- a collecting member, whereby
   - the active peripheries of all fiberising rotors in the fiberising apparatus are divided into at least two sections,
   - fibre blow-off means at the first section are controlled independently of the fibre blow-off means at the second section, whereby the fibre blow-off means at at least one first section are arranged to blow off mineral fibres towards a first location, and
   - the fibre blow-off means at at least one second section are arranged to blow mineral fibres towards a second location on a collecting member, and
   - the fibre blow-off means are arranged to blow off mineral fibres at the first section at a first velocity, and at the second section at a second velocity.

The active periphery of the fiberising rotor has in this connection been defined as the part of the periphery of the fiberising rotor where mineral fibres are formed while the rotor rotates from the mineral melt which is located on the surface of the rotor. Mineral fibres are generally defined as that weight fraction of the binderless fibre material which passes through a 32 µm sieve.

Now it has surprisingly been found that by dividing the active periphery of the fiberising rotor into at least two sectors which can be controlled individually regarding blowing off and applying binder, the processes influencing the forming of mineral fibres at the fiberising rotors can more carefully and better be controlled than earlier. At the same time it is possible in an efficient manner to control the properties of the formed mineral fibres, as the blowing off of fibres and/or applying of binder can be fine-tuned to better correspond to the actual location on the active periphery of the fiberising rotor. Different fiberising rotor sections can be optimised so that for example the temperature difference of the mineral melt on different parts of the fiberising rotor is taken into consideration. The temperature of mineral melt is naturally not constant around the entire periphery of the fiberising rotor, rather it varies along the periphery. Viscosity of the mineral melt depends among other things on the temperature of the melt, so that cold mineral melt has a higher viscosity than warm melt. Thicker fibres are formed of colder melt under the same rotation and blow-off conditions than from warmer melt. According to an embodiment of the invention the active surface of the fiberising rotor can be divided into sections so, that at those sections where the temperature of the mineral melt is known to be lower the fibre blow-off velocity is higher or lower depending on the desired fibre quality. A high fibre blow-off velocity compensates in certain situations the lower temperature and higher viscosity of the melt and the active periphery of the fiberising rotor produces mineral fibres having the tensile and other properties kept at a desired level.

According to the present invention the active periphery of the fiberising rotor is thus divided into at least two sections, at which the blowing off of fibres and applying of binder is independently and separately controlled from each other, i.e. individually. The sections can have the same length or different lengths in relation to each other. The first section can be for example 1.5, 2 or 3 times longer than the second section. According to an embodiment of the present invention the active periphery can de divided into three, four, five or more sections. These sections can all have the same length, or some of them can in relation to each other have the same length, or they can all have different lengths. For example, if the active periphery is divided into four sections the first and the fourth section can have the same length, and the second and third section can have a second and a third length.

At the different sections the blowing off of fibres and applying of binder can according to the invention be individually varied at the active periphery. In other words the fiberising parameters as well as the application amount of binder, type of binder, the blow-off velocity of the fibre blow-off means and/or the fibre blow-off direction can at a first section vary from the corresponding parameter values at a second section at the periphery of one and the same fiberising rotor. According to the present invention the fibre blow-off means blows off mineral fibres at the first section at a first velocity, and at the second section at a second velocity. The area where the fibres are formed and that is located precisely adjacent to, above the melt ring of the fiberising rotor, is called a fiberising field. The conditions in the fiberising field can be controlled by means of the above-mentioned fiberising parameters. The conditions in the fiberising field can be changed by changing a fiberising parameter at one sector independently of the parameter settings of the adjacent sector.

When the fibre blow-off velocity and direction are different at the first and second section of the active periphery, the amount of binder applied and/or type may be the same at both of these sections. It is also possible that all fiberising parameters of two adjacent sections have different values.

According to an embodiment of the present invention mineral fibres are blown off with the fibre blow-off means at a blow-off velocity of at least 80 - 330 m/s, preferably 100 - 300 m/s, typically 100 - 200 m/s. The blowing off of fibres at the different sections at the active periphery is normally performed with a fibre blow-off means. The fibre blow-off means is typically located in the immediate vicinity of the fiberising rotor around and adjacent to the active periphery of the fiberising rotor. The blow-off means is normally formed as a collar fixed to a wall that concentrically surrounds the mantle surface of the fiberising rotor and thus producing wall jets over the mantle surface of the fiberising rotor, the so-called primary blowing off. The inner diameter of the blow-off means is normally essentially as large as the diameter of the associated fiberising rotor. Typically the diameters are identical but the inner diameter of the blow-off means can be in some cases 1 - 3 mm larger than the diameter of the associated fiberising rotor. The entire length of the blow-off means is typically 60 - 80 %, advantageously 65 - 75 % of the entire length of the total periphery of all fiberising rotors in the fiberising apparatus.

The fibre blow-off means can comprise a number of blow-off slots, the width of which usually is 10 - 20 mm, preferably 13 - 17 mm, and the height of which usually is 10 - 20 mm, preferably 10 - 15 mm. The number of blow-off slots in a fibre blow-off means can be chosen as needed, for example depending on the length of the blow-off means along the periphery of the rotor. The manner in which the blow-off slot is formed can be chosen according to need. The cross section of the slot can, for example, be round, rectangular or oblong. The forming of the blow-off slots discharge openings is according to one embodiment round and the slots are formed by drilled holes. The rectangular blow-off slots are separated according to another embodiment of the invention from each other by means of wings, for example of steel, which have been arranged in the blow-off means. The blow-off direction can be controlled by directing these wings. As blow-off medium a gaseous medium is used, such as air, fuel gases or the like.

Separate mineral fibres forming on the surface of the fiberising rotor and blown off therefrom, form so-called mineral fibre filaments, which are constituted from a number of separate fibres. Fibre filaments can be considered to resemble a thread or a wire which has been created when two or several fibres have become intertwined. The degree of twining in a fibre filament depends among other things on the blow-off velocity. A high blow-off velocity normally causes the separate fibres to be shorter, but they more are strongly bound to each other, whereby the final product receives better strength properties. Mineral fibre filaments form during their travel through the collecting chamber fibre flocks, the structure of which is influenced by properties of blowing off and the properties of medium flows around and/or in front of the fiberising rotors.

According to the present invention the fibre blow-off means comprises blow-off slots, through which blow-off air is led over the periphery of the rotor. The air to the blow-off slots is fed through distribution channels. In connection with the blow-off slots, for example behind them, blow-off nozzles can be arranged, which nozzles are connected to means for pressurised air. Blow-off nozzles can then be arranged further inside the distribution channels of the blow-off slots, to which nozzles pressurised air is fed, which is blown out of the nozzles in the same or in a different direction than the air from the blow-off slots. The pressure of the pressurised air fed to the nozzles is usually 2 - 7 bar. The discharge opening of the inner blow-off nozzle can be round, rectangular or oblong. A typical width and height of the discharge opening is about 0.5 - 5 mm. An inner blow-off nozzle can be arranged in connection with all blow-off slots, behind every slot in the corresponding distribution channel. Alternatively, the amount of inner blow-off nozzles can be lower than the amount of blow-off slots. The blow-off nozzles can be arranged as desired in connection with the distribution channels of the blow-off slots along the blow-off means, for example so that an inner blow-off nozzle is arranged in connection with every fifth blow-off slot, in its distribution channel.

According to one embodiment the blow-off velocity is set separately for each section, so that at different sections different blow-off velocities are used. The blow-off velocity can be, for example, highest at the section, where the mineral melt is coldest and the periphery of the same rotor the section can, where the mineral melt is hottest, have a lower blow-off velocity. By means of the blowing off properties, such as blow-off velocity, the properties of the separate mineral fibres and/or the properties of those fibre filaments formed of separate mineral fibres can be influenced.

The blow-off velocities at the different sections can be chosen so, that the entire active periphery produces mineral fibres having relatively similar planned properties, for example thickness and length. According to another embodiment of the present invention the tendency of the fiberising rotor to produce mineral fibres of different thickness and length at different locations of the active periphery can be strengthened. Then the active periphery is divided into sections so, that the fibre blow-off velocity at the different sections is adjusted to produce mineral fibres of different thickness and length.

According to the present invention different amounts of binder can be applied to the first and second section of an active periphery of a fiberising rotor. The amount of binder applied depends among other things on the mineral wool quality to be produced.

According to an embodiment of the present invention two or several different binders can be applied simultaneously or sequentially at the different sections at one or several fiberising rotors of the fiberising apparatus. According to an embodiment of the present invention at the first section a first binder can be added, for example, and at the second section a second binder, whereby the binder applying member at the first section is connected to the feeding member of a first binder and binder applying member at the second section are connected to the feeding means of a second binder. The collected primary web can contain two different binders, if two different types of binder are applied simultaneously. According to a preferred embodiment at least one binder is inorganic. Since the type of binder can be individually chosen for each sector, the properties of the manufactured primary web, e.g. water absorption and fire resistance can be tailored according to need.

If two different binders are applied sequentially, a first binder is applied first with all applying members at all sections during a certain period of time and thereafter a second binder is applied with all applying means at all sections. The time period for applying a binder can be between 0.5 - 5 seconds, typically about 1 - 3 seconds. In this manner planned layers are achieved in the end product. This embodiment also makes it possible to use binder, which does not tolerate long storage in the feeding system.

Water repelling or dust binding agents can also be applied at the fiberising stage. The application can take place with the aid of binder applying member or separate means for additive can be arranged, for example nozzles, around the active periphery of the fiberising rotor. These nozzles can also be operated by section in the same manner as the binder members. Dust binding agent can, for example, be applied to only certain sections of the active periphery. Different additives can also be applied at different sections.

In a fiberising apparatus according to the present invention the number of sections at the active periphery can be freely chosen according to need separately for each rotor. The number of sections can be different for different rotors in the fiberising apparatus. Thus, the periphery of the first and fourth rotor, for example, in a fiberising apparatus can be divided into two sections and the periphery of the second and third rotor into three sections. The manner in which the mantle surface of the rotor is divided into sections mainly depends on the mineral wool quality which is produced and how it is desired to distribute the produced mineral fibres on the collecting member.

According to the present invention the active peripheries of all fiberising rotors in a fiberising apparatus are divided into at least two sections. According to another embodiment at least two of the fiberising rotors in the fiberising apparatus, preferably all fiberising rotors, are divided into an equal number of sections at their active periphery. The binder applying member and/or fibre blow-off means at the same sections at the different fiberising rotors can be adjusted in a similar manner. The fibre blow-off velocity, for example, can at the first section of the second fiberising rotor be equal to the fibre blow-off velocity at the first section of the third fiberising rotor.

According to one embodiment of the present invention the fiberising rotor of the fiberising apparatus typically has the entire periphery of about 3000 - 3500 mm, of which the length of active periphery is about 1300 - 1750 mm. According to another embodiment of the present invention it is preferred if the entire length of the periphery of the fiberising rotors varies between 3800 - 4500 mm, typically 3950 - 4200 mm, and the active periphery comprises 60 - 77 %, typically 62 - 75 % of the total periphery of the fiberising rotors.

According to an embodiment of the present invention several sections at one or several fiberising rotors can be controlled in cooperation with each other, which means that mineral fibres which are produced at two or several sectors at one fiberising rotor or at different sectors at different fiberising rotors are transported by means of blowing off towards a location on one or several collecting members. In this manner a primary web can be collected showing planned layers or areas, at which the properties of mineral fibres differ from each other. It is possible to manufacture a fibre web showing a middle layer of slender fibres, and an outer layer on both sides of the middle layer, which outer layer comprises of thick fibres. Such a structure can be advantageous in some end products, as in this manner products can be manufactured, which products show different strength properties, for example, in different layers.

According to the present invention the fibre blow-off means at first section blows off mineral fibres towards a first location on a fibre collecting member, and the fibre blow-off means at a second section blows off mineral fibres towards a second location on a collecting member. In this manner, by directing the blowing off of the blow-off means at the different sections, mineral fibres with different properties can be collected onto different locations of the collecting member, whereby a primary web can be obtained the properties of which vary either in the cross direction or from the surface of the web towards its bottom. Another option is to produce a web having one large surface with different properties that the other large surface of the same web.

According to another embodiment of the present invention the fibre blow-off means blows off mineral fibres towards at least two collecting members so that mineral fibres are blown off from a first section or several first sections of the active peripheries of one or several rotating fiberising rotors towards a first collecting member, and from a second section or several second sections of the active peripheries of one or several rotating fiberising rotors towards a second collecting member. Two primary mineral wool webs can be manufactured in this manner, the properties of which can differ from each other, for example, they can comprise mainly different binders and/or mineral wool fibres having different properties, such as length.

According to an embodiment of the present invention the mineral fibres are directed towards a collecting member, that comprises at least two collecting surfaces, such as drums, conveyor belts or the like. The collecting surfaces in a collecting member can be placed on top of or next to each other. The collecting member is typically located so, that the distance from the fiberising apparatus to the closest collecting surface is 1.5 - 5.5 metres, preferably 2.5 - 3.5 meters. The collecting surfaces can in certain cases also be very close to the fiberising apparatus, the distance between a collecting surface and the fiberising apparatus can be even less than 1 metre. The collecting surfaces can also be located at different distances from the fiberising apparatus. If the collecting surfaces, for example, are placed on top of each other, the upper collecting surface can be further away from the fiberising apparatus than the lower collecting surface. For example, the distance between the fiberising apparatus and the lower collecting surface can be about 2.5 m, and between the fiberising apparatus and the upper collecting surface 3.6 m.

If two collecting surfaces are used, the blow-off directions of the fibre blow-off means can be adjusted at the different sections at the active peripheries of the fiberising rotors and collecting surfaces so, that thin mineral fibres are blown off towards an upper collecting surface and the coarse mineral fibres are blown off towards a lower collecting surface. A typical primary fibre web that is obtained at the upper collecting surface contains a high fibre percent i.e. a low percentage of such fibre material that is not graded as mineral fibres, but as shot. This light primary web can be used for the manufacture of mineral wool products where good compressibility, tensile strength and thermal insulation properties are important. On the lower collecting surface usually a primary mineral fibre web is obtained, the fibre surface of which is 1.5 - 3 times smaller than the fibre surface of the upper collecting surface. This primary fibre web is then used for the manufacture of mineral wool products, where among other things high compression strength and cleavage strength are important properties.

According to one embodiment of the present invention the mineral fibre amount that a single fiberising rotor manufactures can be optimised by adjusting the fibre blow-off velocities at the different sectors. The manufacture conditions can typically be chosen on the basis of production portions on the upper and lower fiberising rotors. According to a typical division 35 - 65 %, preferably 40 - 60 % of the mineral fibres are manufactured at the upper fiberising rotors. The fiberising parameters at a sector are chosen on the basis of the physical or chemical properties of melt used and/or of the desired fibre properties such as mean fibre diameter or mean fibre length. The blow-off directions and velocities are usually chosen so that the first and second rotors manufacture all together about 50 % of the total amount of manufactured mineral fibre. If required the different parameters are, however, changed, for example, so that the first and second rotor manufacture about 70 % of the total amount of manufactured mineral fibre. Then the blow-off velocities at the first and second rotors are increased. According to an embodiment of the present invention the first and second rotors can produce 50 ± 20 %, preferably 50 ± 10 % of the total manufactured mineral fibre amount. The relation between the amount of mineral fibres manufactured at the upper and lower fiberising rotors can be influenced by means of the fibre blow-off velocities at the different sectors.

In order to emphasize the division of the manufactured fibres between the first and second rotors in relation to the following rotors also the feeding point of melt on to the first rotor can be chosen so that the fiberising portions at the different rotors can be optimised.

If the rotors of the fiberising apparatus are equipped with a magnetic bearing, the information of the distribution of the melt on the different fiberising rotors is obtained through the steering of the magnetic bearing. When a drop cascade of mineral melt hits the surface of the fiberising rotor a pressure towards that point of the rotor is created. This pressure is comparable to the amount of mineral melt that can get hold of rotor surface and the amount of fibre produced at the rotor. This information can be used for controlling of the internal fiberising conditions of the fiberising rotor and for controlling and feeding of binder and other treatment agents.

Since it can be determined according to one embodiment of the invention how the manufactured mineral fibre amounts are distributed between different rotors in a fiberising apparatus, the distribution of the manufactured mineral fibre amount on the collecting surfaces of the collecting member can be influenced at the same time. The invention gives thus the opportunity to control that also the properties of the primary mineral fibre webs, among other things surface weights, without changing the velocities of the collecting surfaces. The mineral fibres, for example, that are manufactured at the first and the second rotor accumulate on the upper collecting surface of the collecting member.

According to one embodiment of the invention also a fibre blender, a so-called fibre mixer, can be arranged in connection with the fiberising apparatus. By means of the fibre blender the manufactured mineral fibre cloud can be "blended" during its transport in the collecting chamber to the collecting member, whereby a homogenous primary web showing equal strength in all directions is obtained. The fibre blender consists of a blow slot with guide vanes and it blows air under the fiberising apparatus and further under a restriction towards the collecting member. It functions in other words as a blow slot under the fiberising apparatus, and resembles blow slots arranged at the separate fiberising rotors. It does not have to be arranged in fixed contact with the fiberising apparatus. The fibre blender can also be formed without guide vanes and it can even consist of a row of round holes. The blender is typically fed with pressurised air, the pressure of which varies between 0 - 70 kPa. The fibre blender can be formed by encasing the lower fiberising rotors and a part of the sides. By using the fibre blender controlled "turbulence" can be achieved in front of the fiberising apparatus, which contributes to the mineral fibres being manufactured at different fiberising rotors and different rotor sections are efficiently blended with each other during their travel to the collecting member. In this manner a primary fibre web with even properties is obtained.

The present invention is particularly well suited to be used together with a fiberising apparatus disclosed in the patent application FI20011561. This fiberising apparatus has a high fibre forming capacity, which easily overloads the other apparatuses in the fibre manufacture process. It is possible with the aid of the present invention to make the manufactured fibres to accumulate more evenly on the used collecting members, if desired or to get them treated in a desired manner.

## Claims

1. Method in the manufacture of mineral fibres, in which method
- mineral melt is led to a first rotating fiberising rotor in a fiberising apparatus comprising at least two fiberising rotors,
- mineral melt is thrown from the mantle surface of the first rotating rotor to the mantle surface of a second rotating rotor, and from there successively to the mantle surfaces of possible following rotors,
- mineral melt is formed to mineral fibres at the active peripheries of the rotating rotors,
- the mineral fibres formed are blown off from the fiberising rotors of the fiberising apparatus towards a collecting member by means of fibre blow-off means arranged at the active peripheries of the rotors, whereby the active periphery of the at least one of the fiberising rotors is divided into at least a first section and a second section,
- binder is applied to the mineral fibres during their formation by means of a binder applying members arranged at the active peripheries of the rotors,
**characterised in that**
- the active peripheries of all fiberising rotors in a fiberising apparatus are divided into at least two sections,
- the fibre blow-off means at the first section are controlled independently of the fibre blow-off means at the second section, whereby the fibre blow-off means at the first section blows off mineral fibres towards a first location on a fibre collecting member, and the fibre blow-off means at the second section blows off mineral fibres towards a second location on a collecting member, and
- the fibre blow-off means blows off mineral fibres at the first section at a first velocity, and at the second section at a second velocity.

2. Method according to claim 1, **characterised in that** the binder applying member at the first section is controlled independently of the binder applying member at the second section.

3. Method according to claim 2, **characterised in that** at the first section a first binder is added and at the second section a second binder is added.

4. Method according to claim 1, **characterised in that** the fibre blow-off means blows off mineral fibres towards at least two collecting members so, that mineral fibres are blown off
- from a first section or several first sections of active peripheries of one or several rotating fiberising rotors towards a first collecting member, and
- from a second section or several second sections of active peripheries of one or several rotating fiberising rotors towards a second collecting member.

5. Method according to claim 1, **characterised in that** the mineral fibres are blown with blow-off means at a blow-off velocity of 80 - 330 m/s, preferably 100 - 300 m/s.

6. Apparatus in the manufacture of mineral fibres, which apparatus comprises
- at least three fiberising rotors, which are arranged to rotate around essentially horizontal axes, for transforming mineral melt into mineral fibres at the active peripheries of the fiberising rotors,
- fibre blow-off means which are arranged at the active peripheries of the fiberising rotors for blowing off of mineral fibres from the fiberising apparatus towards a collecting member, whereby at least one of the active peripheries of the fiberising rotors is divided into at least a first section and a second section,
- binder applying members which are arranged at the active peripheries of the fiberising rotors, and
- a collecting member,
**characterised in that**
- the active peripheries of all fiberising rotors in the fiberising apparatus are divided into at least two sections,
- fibre blow-off means at the first section are controlled independently of the fibre blow-off means at the second section, whereby the fibre blow-off means at at least one first section are arranged to blow off mineral fibres towards a first location, and
- the fibre blow-off means at at least one second section are arranged to blow mineral fibres towards a second location on a collecting member, and
- the fibre blow-off means are arranged to blow off mineral fibres at the first section at a first velocity, and at the second section at a second velocity.

7. Apparatus according to claim 6, **characterised in that** a binder applying member at at least one first section is controlled independently of the binder applying member at the second section.

8. Apparatus according to claim 6, **characterised in that**
the apparatus further comprises a second collecting member for collecting mineral fibres that are blown off, and that
- the fibre blow-off means at a first section or several first sections of active peripheries of one or several rotating fiberising rotors are arranged to blow off towards the first collecting member, and
- the fibre blow-off means at a second section or several second sections of active peripheries of one or several rotating fiberising rotors are arranged to blow off towards the second collecting member.

9. Apparatus according to claim 6, **characterised in that** at least two of the fiberising rotors of the fiberising apparatus, preferably all fiberising rotors are divided into as many sections.

10. Apparatus according to claim 6, **characterised in that** the binder applying members at a first section or several first sections of active peripheries of one or several rotating fiberising rotors are connected to feeding means of a first binder and binder applying member at a second section or several second sections of active peripheries of one or several rotating fiberising rotors are connected to a feeding means of a second binder.

## Patentansprüche

1. Verfahren bei der Herstellung von Mineralfasern, wobei bei dem Verfahren
- eine Mineralschmelze zu einem ersten rotierenden Faserherstellungsrotor in einer Faserherstellungsvorrichtung, die mindestens zwei Faserherstellungsrotoren umfasst, geleitet wird,
- die Mineralschmelze von der Manteloberfläche des ersten rotierenden Rotors zu der Manteloberfläche eines zweiten rotierenden Rotors, und von dort nacheinander an die Manteloberflächen der möglichen nachfolgenden Rotoren geschleudert wird,
- die Mineralschmelze zu Mineralfasern an den aktiven Rändern der Rotoren geformt wird,
- die geformten Mineralfasern aus den Faserherstellungsrotoren der Faserherstellungsvorrichtung in Richtung eines Sammelelements mittels Faserabblasmitteln, die an den aktiven Rändern der Rotoren angeordnet sind, abgeblasen werden, wobei der aktive Rand des mindestens einen der Faserherstellungsrotoren in mindestens einen ersten Abschnitt und einen zweiten Abschnitt unterteilt ist,
- ein Bindemittel auf die Mineralfasern während ihres Formens mittels Bindemittelauftrageelementen, die an den aktiven Rändern der Rotoren angeordnet sind, aufgetragen wird,
**dadurch gekennzeichnet, dass**
- die aktiven Ränder aller Faserherstellungsrotoren in einer Faserherstellungsvorrichtung in mindestens zwei Abschnitte unterteilt sind,
- die Faserabblasmittel am ersten Abschnitt unabhängig von den Faserabblasmitteln am zweiten Abschnitt gesteuert werden, wobei die Faserabblasmittel am ersten Abschnitt Mineralfasern in Richtung einer ersten Position auf einem Fasersammelelement abblasen, und die Faserabblasmittel am zweiten Abschnitt Mineralfasern in Richtung einer zweiten Position auf einem Sammelelement abblasen, und
- die Faserabblasmittel die Mineralfasern an dem ersten Abschnitt mit einer ersten Geschwindigkeit, und bei dem zweiten Abschnitt mit einer zweiten Geschwindigkeit abblasen.

2. Verfahren nach Anspruch 1, **dadurch gekennzeichnet, dass** das Bindemittelauftrageelement am ersten Abschnitt unabhängig von dem Bindemittelauftrageelement am zweiten Abschnitt gesteuert wird.

3. Verfahren nach Anspruch 2, **dadurch gekennzeichnet, dass** am ersten Abschnitt ein erstes Bindemittel hinzugefügt wird und am zweiten Abschnitt ein zweites Bindemittel hinzugefügt wird.

4. Verfahren nach Anspruch 1, **dadurch gekennzeichnet, dass** die Faserabblasmittel die Mineralfasern so in Richtung von mindestens zwei Sammelelementen blasen, dass die Mineralfasern,
- von einem ersten Abschnitt oder mehreren ersten Abschnitten der aktiven Ränder des einen der mehreren rotierenden Faserherstellungsrotoren in Richtung eines ersten Sammelelements, und
- von einem zweiten Abschnitt oder mehreren Abschnitten der aktiven Ränder der einen oder mehreren rotierenden Faserherstellungsrotoren in Richtung eines zweiten Sammelelements abgeblasen werden.

5. Verfahren nach Anspruch 1, **dadurch gekennzeichnet, dass** die Mineralfasern mit den Abblasmitteln mit einer Geschwindigkeit von 80-330 m/s, vorzugsweise 100-300 m/s abgeblasen werden.

6. Vorrichtung zur Herstellung von Mineralfasern, wobei die Vorrichtung umfasst:
- mindestens drei Faserherstellungsrotoren, die eingerichtet sind, um eine im Wesentlichen horizontale Achse zu rotieren, um eine Mineralschmelze an den aktiven Rändern der Faserherstellungsrotoren in Mineralfaser zu verwandeln,
- Faserabblasmittel, die an den aktiven der Rändern der Faserherstellungsroten angebracht sind, um Mineralfasern von der Faserherstellungsvorrichtung in Richtung eines Sammelelements abzublasen, wobei mindestens eine der aktiven Ränder der Faserherstellungsrotoren in mindestens einen ersten Abschnitt und einen zweiten Abschnitt unterteilt ist,
- Bindemittelauftragelemente, die an den aktiven Rändern der Faserherstellungsrotoren angebracht sind, und
- ein Sammelelement,
**dadurch gekennzeichnet, dass**
- die aktiven Ränder aller Faserherstellungsrotoren in der Faserherstellungsvorrichtung in mindestens zwei Abschnitte unterteilt sind,
- Faserabblasmittel am ersten Abschnitt unabhängig von den Faserabblasmitteln am zweiten Abschnitt gesteuert werden, wobei die Faserabblasmittel an mindestens einem ersten Abschnitt eingerichtet sind, die Mineralfaser in Richtung einer ersten Position zu blasen, und
- die Faserabblasmittel an mindestens einem zweiten Abschnitt eingerichtet sind, die Mineralfasern in Richtung einer zweiten Position auf ein Sammelelement abzublasen, und
- die Faserabblasmittel eingerichtet sind, die Mineralfasern an dem ersten Abschnitt mit einer ersten Geschwindigkeit und an dem zweiten Abschnitt mit einer zweiten Geschwindigkeit abzublasen.

7. Vorrichtung nach Anspruch 6, **dadurch gekennzeichnet, dass** ein Bindemittelauftrageelement an mindestens einem ersten Abschnitt unabhängig von dem Bindemittelaufratrageelement an dem zweiten Abschnitt gesteuert wird.

8. Vorrichtung nach Anspruch 6, **dadurch gekennzeichnet, dass** die Vorrichtung weiter ein zweites Sammelelement zum Sammeln von Mineralfasern, die abgeblasen werden, umfasst, und dass
- Faserabblasmittel an einem ersten Abschnitt oder mehreren ersten Abschnitten der aktiven Ränder der einen oder mehreren rotierenden Faserherstellungsrotoren eingerichtet sind, in Richtung des ersten Sammelelements abzublasen, und
- Faserabblasmittel an einem zweiten Abschnitt oder mehreren zweiten Abschnitten der aktiven Ränder der einen oder mehreren rotierenden Faserherstellungsrotoren eingerichtet sind, in Richtung des zweiten Sammelelements abzublasen.

9. Vorrichtung nach Anspruch 6, **dadurch gekennzeichnet, dass** mindestens zwei der Faserherstellungsrotoren der Faserherstellungsvorrichtung, bevorzugt alle Faserherstellungsrotoren, in gleich viele Abschnitte unterteilt sind.

10. Vorrichtung nach Anspruch 6, **dadurch gekennzeichnet, dass** die Bindemittelauftrageelemente an einem ersten Abschnitt oder mehreren ersten Abschnitten der aktiven Ränder des einen oder der mehreren rotierenden Faserherstellungsrotoren mit Zuführmitteln eines ersten Bindemittels verbunden sind und Bindemittelauftrageelemente an einem zweiten Abschnitt oder mehreren zweiten Abschnitten der aktiven Ränder des oder der mehreren rotierenden Faserherstellungsrotoren mit Zuführmitteln eines zweiten Bindemittels verbunden sind.

## Revendications

1. Procédé de fabrication de fibres minérales, procédé dans lequel
- la matière minérale fondue est conduite vers un premier rotor de fibrage en rotation dans un appareil de fibrage comprenant au moins deux rotors de fibrage,
- la matière minérale fondue est projetée à partir de la surface du manteau du premier rotor en rotation sur la surface du manteau d'un second rotor en rotation, et successivement à partir de là, sur la surface du manteau d'éventuels rotors suivants,
- la matière minérale fondue est formée de fibres minérales au niveau des zones périphériques actives des rotors en rotation,
- les fibres minérales formées sont évacuées par soufflage des rotors de fibrage de l'appareil de fibrage vers un élément collecteur par l'intermédiaire de moyens d'évacuation par soufflage des fibres, agencés au niveau des zones périphériques actives des rotors, de sorte que la périphérie active de au moins un des rotors de fibrage est divisée en au moins une première section et une seconde section,
- un liant est appliqué sur les fibres minérales pendant leur formation au moyen de dispositifs d'application de liant disposés au niveau des zones périphériques actives des rotors,
**caractérisé en ce que**
- les périphéries actives de tous les rotors de fibrage de l'appareil de fibrage sont divisées en au moins deux sections,
- les moyens d'évacuation par soufflage des fibres au niveau de la première section sont commandés de façon indépendante des moyens d'évacuation par soufflage des fibres au niveau de la seconde section, de sorte que les moyens d'évacuation par soufflage des fibres au niveau de la première section évacuent par soufflage les fibres minérales vers une première position sur un élément collecteur de fibres, et que les moyens d'évacuation des fibres par soufflage au niveau de la seconde section évacuent par soufflage les fibres minérales vers une seconde position sur un élément collecteur, et
- les moyens d'évacuation des fibres par soufflage évacuent par soufflage les fibres minérales, au niveau de la première section à une première vitesse, et au niveau de la seconde section à une seconde vitesse.

2. Procédé selon la revendication 1, **caractérisé en ce que** le dispositif d'application de liant présent au niveau de la première section est commandé de façon indépendante du dispositif d'application de liant présent au niveau de la seconde section.

3. Procédé selon la revendication 2, **caractérisé en ce que**, au niveau de la première section, un premier liant est ajouté et, au niveau de la seconde section, un second liant est ajouté.

4. Procédé selon la revendication 1, **caractérisé en ce que** les moyens d'évacuation des fibres par soufflage soufflent les fibres minérales vers au moins deux éléments collecteurs de sorte que les fibres minérales sont évacuées par soufflage
- à partir d'une première section ou de plusieurs premières sections des zones périphériques actives d'un ou de plusieurs rotors de fibrage en rotation vers un premier élément collecteur, et
- à partir d'une seconde section ou de plusieurs secondes sections des zones périphériques actives d'un ou de plusieurs rotors de fibrage en rotation vers un second élément collecteur.

5. Procédé selon la revendication 1, **caractérisé en ce que** les fibres minérales sont soufflées avec des moyens d'évacuation par soufflage à une vitesse de soufflage comprise entre 80 et 330 m/s, de préférence comprise entre 100 et 300 m/s.

6. Appareil de fabrication de fibres minérales, lequel appareil comporte
- au moins trois rotors de fibrage, lesquels sont agencés pour tourner autour d'axes essentiellement horizontaux, pour transformer une matière minérale fondue en fibres minérales au niveau des zones périphériques actives des rotors de fibrage,
- des moyens d'évacuation des fibres par soufflage qui sont agencés au niveau des zones périphériques actives des rotors de fibrage en vue d'évacuer par soufflage les fibres minérales depuis l'appareil de fibrage vers un élément collecteur, de sorte qu'au moins l'une des zones périphériques actives des rotors de fibrage est divisée en au moins une première section et une seconde section,
- des dispositifs d'application de liant qui sont agencés au niveau des zones périphériques actives des rotors de fibrage, et
- un élément collecteur,
**caractérisé en ce que**
- les périphéries actives de tous les rotors de fibrage de l'appareil de fibrage sont divisées en au moins deux sections,
- les moyens d'évacuation de fibres par soufflage au niveau de la première section sont commandés de façon indépendante des moyens d'évacuation de fibres par soufflage au niveau de la seconde section, de sorte que les moyens d'évacuation de fibres par soufflage au niveau de au moins la première section, sont conçus pour souffler les fibres minérales vers une première position, et
- les moyens d'évacuation de fibres par soufflage au niveau d'au moins une seconde section sont agencés pour souffler les fibres minérales vers une seconde position sur un élément collecteur, et
- les moyens d'évacuation des fibres par soufflage sont agencés pour évacuer par soufflage les fibres minérales, au niveau de la première section, à une première vitesse et, au niveau de la seconde section, à une seconde vitesse.

7. Appareil selon la revendication 6, **caractérisé en ce qu'**un dispositif d'application de liant au niveau, au moins d'une première section, est commandé de façon indépendante du dispositif d'application de liant au niveau de la seconde section.

8. Appareil selon la revendication 6, **caractérisé en ce que**
- l'appareil comprend, de plus, un second élément collecteur pour collecter les fibres minérales qui sont évacuées par soufflage, et **en ce que**
- les moyens d'évacuation de fibres par soufflage au niveau d'une première section ou de plusieurs premières sections des zones périphériques actives d'un ou de plusieurs rotor(s) de fibrage en rotation sont agencés pour évacuer les fibres par soufflage vers le premier élément collecteur, et
- les moyens d'évacuation des fibres par soufflage au niveau d'une seconde section ou de plusieurs secondes sections des zones périphériques actives d'un ou de plusieurs rotor(s) de fibrage en rotation sont agencés pour évacuer les fibres par soufflage vers le second élément collecteur.

9. Appareil selon la revendication 6, **caractérisé en ce que** au moins deux des rotors de fibrage de l'appareil de fibrage, de préférence, la totalité des rotors de fibrage sont divisés en de nombreuses sections.

10. Appareil selon la revendication 6, **caractérisé en ce que** les dispositifs d'application de liant au niveau d'une première section ou de plusieurs premières sections des zones périphériques actives d'un ou de plusieurs rotor(s) de fibrage en rotation est (sont) raccordé(s) à des moyens de fourniture d'un premier liant et un dispositif d'application de liant situé au niveau d'une seconde section ou de plusieurs secondes sections des zones périphériques actives d'un ou de plusieurs rotor(s) de fibrage en rotation est (sont) raccordé(s) à des moyens de fourniture d'un second liant.
